# EUROPEAN PATENT SPECIFICATION

(11) **EP 4 227 075 B1**
(45) Date of publication and mention of the grant of the patent: **26.03.2025**
(21) Application number: 22156266.3
(22) Date of filing: 11.02.2022
(51) Int. Cl.: B29D 99/00, B29C 70/52, B29C 70/08

(54) **HYBRID PULTRUSION PLATES FOR A CONDUCTIVE SPAR CAP OF A WIND TURBINE BLADE**
HYBRIDE PULTRUSIONSPLATTEN FÜR EINE LEITENDE HOLMKAPPE EINER WINDTURBINENSCHAUFEL
PLAQUES DE PULTRUSION HYBRIDES POUR UN CAPUCHON DE LONGERON CONDUCTEUR D'UNE PALE D'ÉOLIENNE

(43) Date of publication of application: 16.08.2023
(73) Proprietor: LM Wind Power A/S, 6000 Kolding (DK)
(72) Inventor: JESPERSEN, Klavs, 6000 Kolding (DK); BAVILOLIAIE, Mahdi, 6000 Kolding (DK); LILLEHEDEN, Lars, 6000 Kolding (DK)
(74) Representative: COPA Copenhagen Patents

(56) References cited:
- WO-A1-2021/213651
- CN-A- 113 738 571
- GB-A- 1 373 782
- US-A1- 2017 082 089

## Description

### Field of the invention

The present invention relates to a method of manufacturing a wind turbine blade shell component and to a reinforcing structure, such as a spar cap, for a wind turbine blade, the reinforcing structure comprising a plurality of pultrusion plates.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine blades are typically made from a fibre-reinforced polymer material and comprise a pressure side shell half and a suction side shell half. The cross-sectional profile of a typical blade includes an airfoil for creating an air flow leading to a pressure difference between both sides. The resulting lift force generates torque for producing electricity. Wind turbine blades are usually manufactured by forming two shell parts or shell halves from layers of woven fabric or fibre and resin. Spar caps or main laminates are placed or integrated in the shell halves and may be combined with shear webs or spar beams to form structural support members. Spar caps or main laminates may be joined to, or integrated within, the inside of the suction and pressure halves of the shell.

As the size of wind turbine blades increases, various challenges arise from the blades being subjected to increased forces during operation, requiring improved reinforcing structures. In some known solutions, pultruded fibrous strips of material are used to design spar caps. Pultrusion is a continuous process in which fibres are pulled through a supply of liquid resin and then heated in a chamber where the resin is cured. Such pultruded strips can be cut to any desired length. As such, the pultrusion process is typically characterized by a continuous process that produces composite parts having a constant cross-section. Thus, a plurality of pultrusions can be vacuum infused together in a mould to form the spar caps.

Typically, a spar cap in a wind turbine blade is made from either carbon pultrusions or glass pultrusions. Carbon fibres are typically lighter than glass fibres by volume, and have improved tensile and compressive strength. One of the challenges of wind turbine blade manufacturing is that a lightning protection system of the blade often requires that at least some blade components have a sufficiently high electrical conductivity through the thickness of the components, such as reinforcing sections like spar caps. There is thus an ongoing need for an improved pultruded spar cap and method for incorporating such spar cap in a wind turbine blade.

CN 113738571 A discloses a carbon-glass mixed pultrusion plate for a main beam comprising a plurality of carbon-glass mixed pultrusion plates and a plurality of first conductive fabrics. The plurality of carbon-glass mixed pultrusion plates are stacked along the width direction and the thickness direction and a first conductive fabric is laid between two adjacent layers of carbon glass mixed pultrusion plates. The first conductive fabrics exceed the corresponding layers of carbon-glass mixed pultrusion plates and are downwards or upwards clung to the side surfaces of the carbon-glass mixed pultrusion plates, so that two adjacent layers of first conductive fabrics are overlapped.

Also, an existing challenge of known pultrusion processes is to obtain a correct and consistent placement of the fibre material. Some of the known techniques make it difficult to control the fibre location and to maintain the correct distribution within the pultruded article.

It is therefore an object of the present invention to provide a wind turbine blade with an improved reinforcing structure, such as a spar cap, and to provide a method for manufacturing said reinforcing structure that allows for an improved control of the architecture of pultruded articles.

It is another object of the present invention to provide an optimized arrangement of materials used in the manufacture of a spar cap.

It is another object of the present invention to provide a reinforcing structure for a wind turbine blade which is cost efficient structure and has optimized material characteristics for use in a lightning protection system of the blade.

It is another object of the present invention to provide a suitable reinforcing structure for a wind turbine blade which can be manufactured efficiently.

### Summary of the invention

It has been found that one or more of the aforementioned objects can be obtained by providing a method of manufacturing a wind turbine blade shell component, the method comprising the steps of
providing a plurality of pultrusion plates, wherein each pultrusion plate comprises a top surface, an opposing bottom surface and two lateral surfaces,
arranging the pultrusion plates on a blade shell material in a mould for the blade shell component, and
bonding the pultrusion plates with the blade shell material to form the blade shell component,
   wherein each pultrusion plate is formed of a pultrusion fibre material comprising a glass fibre material and a carbon fibre material, wherein the carbon fibre material is provided along the entire lateral surfaces of the pultrusion plate, and wherein the glass fibre material is selected from
a glass fibre fabric,
a glass fibre preform comprising a consolidated arrangement of glass fibres and a binding agent, and
a plurality of glass fibres encapsulated by a veil or a foil,
or combinations thereof.

It was found that this method allows for a significantly improved control of the architecture of the pultrusion plate, in particular with respect to the correct positioning of the carbon fibre material and the glass fibre material. Since the glass fibre material is held together or consolidated, preferably at the centre of the pultrusion plate, it can be ensured that the adjacent or surrounding carbon fibre material is distributed and maintained at the correct location. Using one or more of the suggested approaches to consolidate or hold together the glass fibre material, i.e. providing (i) a glass fibre fabric, (ii) a glass fibre preform comprising a consolidated arrangement of glass fibres and a binding agent, or (iii) a plurality of glass fibres encapsulated by a veil or a foil, provides an even and well-defined distribution of the carbon fibre material in the hybrid pultrusion process. This, in turn, is critical for the intended use of the pultrusion plates, i.e., as part of a lightning protection system of the wind turbined blade.

Additionally, this method and structure of the pultrusion plate are found to enhance the lightning protection properties and structural performance of the blade. In particular, it was found that the present solution reduces the risk for flaring over the pultrusion spar beam. Thus, structural and lightning protection performance can be enhanced at minimum material cost. Carbon fibres usually have high electrical conductivity and high stiffness per weight. These properties are desirable in the spar cap of a wind turbine blade. However, drawbacks of carbon fibres include the relatively low strain to failure and the comparatively high price per kg. Glass fibres are typically cheaper and have higher strain to failure. However, the electrical conductivity of glass fibres is minimal and stiffness per weight is significantly lower.

It is particularly preferred that the glass fibre material of the pultrusion plate is surrounded by the carbon fibre material. Preferably, the glass fibre material of the pultrusion plate is surrounded by the carbon fibre material along the lateral surfaces and along the top and bottom surfaces of the pultrusion plate. In a preferred embodiment of the pultrusion plate, the glass fibre fabric, the glass fibre preform or the plurality of glass fibres encapsulated by a veil or a foil, are encapsulated with carbon fibres.

In a preferred embodiment, the glass fibre material is a glass fibre fabric. In a preferred embodiment, the glass fibre fabric is a stitched fabric, a woven fabric, a knit fabric, a nonwoven fabric or a continuous filament mat. In some embodiments, the glass fibre fabric is a UD-fabric that is woven or stitched.

In a preferred embodiment, the glass fibre material is a glass fibre preform comprising a consolidated arrangement of glass fibres and a binding agent. The glass fibre preform preferably comprises a glass fibre material which is at least partially joined together by means of the binding agent, wherein the binding agent is preferably present in an amount of 0.1-15 wt% relative to the weight of the fibre material of the preform. In some embodiments, the glass fibre material comprises, or consists of, glass fibre rovings. In a preferred embodiment, the binding agent is present in an amount of 0.1-15 wt% relative to the weight of the fibre material. In some embodiments, the binding agent is a thermoplastic binding agent. Typically, for forming the preform, the fibre material is at least partially joined together by means of the binding agent by thermal bonding. The binding agent for preparing the preform could be a binding powder, such as a thermoplastic binding powder.

In a preferred embodiment, the binding agent of the preform is present in an amount of 0.5-10 wt%, preferably 0.5-5 wt%, more preferably 0.5-3.5 wt%, relative to the weight of the fibre material in the preform. The binding agent may also comprise two or more different substances. According to another embodiment, the melting point of the binding agent is between 40° and 220 °C, preferably between 40 and 180 °C, such as between 40 and 170 °C, or between 40 and 160 °C. According to a preferred embodiment, the binding agent comprises a polyester, preferably a bisphenolic polyester. An example of such binding agent is a polyester marketed under the name NEOXIL 940. Examples include NEOXIL 940 PMX, NEOXIL 940 KS 1 and NEOXIL 940 HF 2B, all manufactured by DSM Composite Resins AG. Preferably, the binding agent is a polyester, preferably a bisphenolic polyester. In other embodiments, the binding agent is a hotmelt adhesive or based on a prepreg resin.

In a preferred embodiment, the glass fibre preform comprises multiple glass fibre layers stacked on top of each other. The multiple glass fibre layers, such as three or more glass fibre layers, may be consolidated or bound together by, for example, a binding agent or an adhesive, or by a stitching. In a preferred embodiment, the glass fibre preform comprises glass fibre rovings.

In another preferred embodiment, the glass fibre material of the pultrusion plate comprises a plurality of glass fibres encapsulated by a veil or a foil or combinations thereof.

It is preferred that the glass fibre fabric, the glass fibre preform or the plurality of glass fibres encapsulated by a veil or a foil, are substantially slab-shaped. In a preferred embodiment, the glass fibre fabric, the glass fibre preform or the plurality of glass fibres encapsulated by a veil or a foil has the shape of a rectangular cuboid. Typically, the glass fibre fabric, the glass fibre preform or the plurality of glass fibres encapsulated by a veil or a foil, will have a rectangular cross section.

It is also preferred that the glass fibre fabric, the glass fibre preform and/or the plurality of glass fibres encapsulated by a veil or a foil, are formed prior to the pultrusion process.

Thus, the glass fibre fabric, the glass fibre preform and/or the plurality of glass fibres encapsulated by a veil or a foil, are used in the pultrusion process, preferably as centre or core reinforcement material, preferably in combination with a plurality of tows of carbon fibre.

In a preferred embodiment, the carbon fibre material of the pultrusion plate comprises a plurality of tows of carbon fibre material, and wherein adjoining tows of carbon fibre material are provided along the entire lateral surfaces of the pultrusion plate.

In a preferred embodiment, the ratio of carbon fibre material to glass fibre material in the pultrusion plate is between 1/5 to 1/1, preferably 1/4 to 1/1. This was found to provide optimised properties of the pultrusion plate in terms of electrical conductivity and overall stiffness. In some embodiments, a conductive material, such as a carbon biax layer, a carbon veil or a glass/carbon hybrid fabric or a glass/carbon hybrid veil, is used to electrically connect the pultrusion plates transversely within a stack of adjacent pultrusion plates. This can be implemented as an interlayer between pultrusion plates or only as the first and/or last layer in the stack of pultrusion plates.

The step of arranging the pultrusion plates on blade shell material in a mould for the blade shell component preferably comprises arranging the pultrusion plates into adjacent stacks of pultrusion plates, wherein adjacent refers to a substantially chordwise direction. These stacks usually extend in a substantially spanwise direction of the shell half. The step of bonding the pultrusion plates with the blade shell material to form the blade shell component usually comprises a resin infusion step in which the pultrusion plates and the blade shell material are infused with a resin, for example in a VARTM process.

The terms tows and rovings are used interchangeably herein. In some embodiments, each tow comprises a plurality of carbon filaments, wherein each filament comprises an outer layer of sizing. In addition, each pultrusion plate preferably comprises a resin or binding agent which is used in the pultrusion process for joining the carbon fibre material and the glass fibre material into a single pultrusion string. Preferably, each pultrusion plate comprises a matrix of fibre tows arranged in columns and rows, as seen in a vertical cross section of the plate. Thus, pultrusion fibre material may comprise glass fibres, carbon fibres, a resin or binding agent, and optionally additional reinforcing material. Typically, the pultrusion plate has a constant cross-section along its length.

Adjoining tows of carbon fibre material are provided along the entire lateral surfaces of the pultrusion plate, that is, from the top surface to the bottom surface. It is thus particularly preferred that the lateral surfaces of the pultrusion plate are free from glass fibre material.

Each stack of pultrusion plates may comprise 2-30, such as 5-20 pultrusion plates successively arranged on top of each other. Thus, each stack will usually extend in a spanwise direction of the blade. In a midsection between a root end and a tip end, each stack may comprise 8-15 layers of pultrusion plates, whereas towards the root end and towards the tip end the number of layered pultrusion plates may decrease to 1-3. Thus, the stack of pultrusion plates is preferably tapered towards both the root end and the distal end. Such configuration advantageously allows for a profile that is consistent with the thickness profile of the shell. Typically, two or more, or three or more stacks of pultrusion plates are arranged next to each other, adjacent to each other in a substantially chordwise direction. Typically, a resin will be infused in the stack of pultrusion plates. This can, for example, be done using vacuum-assisted resin transfer moulding.

The blade shell component is usually a shell half, such as a shell half with a reinforcing structure such as a spar cap. The blade shell material may include one or more fibre layers and/or a gelcoat. The plurality of pultrusion plates will typically extend in a spanwise direction of the shell half or of the blade. Thus, at least some of the pultrusion plates have preferably a length corresponding to 60-95% of the blade length. A polymer resin is typically infused into pultrusion plates following the lay-up into the shell half.

In a preferred embodiment, the pultrusion fibre material comprises a plurality of tows of carbon fibre material. In a preferred embodiment, each tow comprises 10,000 to 100,000 filaments, preferably 20,000 to 60,000 filaments, of carbon fibre.

In a preferred embodiment, the tows of carbon fibre material extend substantially parallel to each other within the pultrusion plate. In a preferred embodiment, the tows of carbon fibre material are arranged in an array, preferably a regular array, of rows and columns of tows, as seen in a vertical cross section of the pultrusion plate. The rows will typically extend in a substantially horizontal or chordwise direction, whereas the columns will typically extend in a substantially vertical or flapwise direction. The array of rows and columns of tows will typically be constant over the length of the pultrusion plate.

In a preferred embodiment, the tows of carbon fibre material are arranged in a plurality of rows of tows, and optionally a plurality of columns of tows, as seen in a vertical cross section of the pultrusion plate.

In a preferred embodiment, the lateral surfaces of each pultrusion plate are free from glass fibres, preferably by providing a continuous path of adjoining tows of carbon fibre material along the lateral edges of the pultrusion plate, the continuous path of adjoining tows of carbon fibre material extending from the top surface to the opposing bottom surface of the pultrusion plate. In some embodiments, the adjoining tows of carbon fibre material extend from each lateral surface inward over a chordwise or horizontal distance of 2-25 mm, preferably 2-12 mm. In some embodiments, said chordwise or horizontal distance is longer, e.g. 8-12 mm at the top and bottom surfaces of the pultrusion plate, and shorter towards the midpoint of each lateral surface, such as 1-4 mm.

In a preferred embodiment, the glass fibre material and the plurality of tows of carbon fibre material form a non-random pattern, preferably a symmetrical pattern, as seen in a vertical cross section of the pultrusion plate. Typically, the pattern is constant over the length of the pultrusion plate. In another preferred embodiment, the pattern comprises one more vertical columns of carbon fibre tows extending from the top surface to the bottom surface of the pultrusion plate, as seen in a vertical cross section of the pultrusion plate. It is preferred that the pattern has reflectional symmetry or bilateral symmetry as appearing on the vertical cross section of the pultrusion plate, such that the left and right sides are mirror images of each other.

In a preferred embodiment, the pultrusion plates are arranged into adjacent stacks of pultrusion plates, and wherein a continuous path of adjoining tows of carbon fibre material extends from the top surface of the uppermost pultrusion plate to the bottom surface of the lowermost pultrusion plate of each stack of pultrusion plates. Said continuous path of adjoining tows of carbon fibre material within the stack is preferably an electrically conducting path. Thus, the entire stack may conduct a lightning current from the top surface of the stack to the bottom surface of the stack, preferably in a substantially vertical or flapwise direction.

It is particularly preferred that the pultrusion plates, and the reinforcing structure comprising the pultrusion plates, do not comprise any isolated tows of carbon fibre material, such as tows of carbon fibre material that are not electrically coupled to another tow of carbon fibre material. Thus, in a particularly preferred embodiment, all tows of carbon fibre material within the pultrusion plate are electrically coupled, i.e. providing a conduction path for electrical energy, such as a lightning current, between the tows of carbon fibre material. This is found to effectively prevent flashovers inside the spar cap when the blade is hit by a lightning strike, thus preventing damage to the pultrusion plate and to the reinforcing structure, such as the spar cap.

In some embodiments, the stacked pultrusion plates are pre-bonded together prior to being bonded to the blade shell. Alternatively, the stacked pultrusion plates are co-bonded with the blade shell materials. In a preferred embodiment, the stacked pultrusion plates are bonded with the blade shell material using an adhesive or in a vacuum assisted resin transfer moulding (VARTM) process.

Usually, the top and bottom surfaces face opposing flapwise directions, whereas the lateral surface typically face towards the trailing edge and towards the leading edge of the blade half, respectively. The present inventors have found that an efficient lightning protection system benefits from the conductive carbon fibre materials being connected electrically and/or physically throughout the reinforcing structure, in particular in the vertical or flapwise direction, along the lateral edges of the stacked pultrusion plates, to ensure that flashovers do not occur inside the spar cap when the blade is hit by a lightning strike. Thus, it is advantageous that the electrical conductivity through the thickness of the pultrusion plates is relatively high. Thus, the continuous path of adjoining tows of carbon fibre material extending from the top surface to the opposing bottom surface of the pultrusion plate may advantageously provide an electrically conducting path, in particular for lightning strikes, throughout the vertical direction of the pultrusion plate. In a preferred embodiment, the continuous path of adjoining tows of carbon fibre material extends substantially vertically within the pultrusion plate.

In a preferred embodiment, adjoining tows of carbon fibre material means adjacent tows of carbon fibre material that are spaced apart by a distance not more than 100 µm, such as not more than 50 µm, preferably not more 30 µm, such as not more than 20 µm, preferably not more than 10 µm. Such maximum distances are found to provide a sufficiently electrically conductive path between adjoining tows of carbon fibre material.

In a particularly preferred embodiment, the distance between adjoining tows of carbon fibre material is less than 100 µm, preferably less than 50 µm, more preferably less than 20 µm, most preferably less than 10 µm. In some embodiments, the distance between adjoining tows of carbon fibre material is zero.

In a preferred embodiment, adjoining tows of carbon fibre material are provided along the top surface of each pultrusion plate. In another preferred embodiment, adjoining tows of carbon fibre material are provided along the bottom surface of each pultrusion plate. The adjoining tows of carbon fibre material may extend from the top and from the bottom surface, respectively, inward along a vertical distance of 1-3 mm, such as 1.5-2.0 mm.

In a preferred embodiment, several adjacent columns of adjoining tows of carbon fibre material are provided along the entire lateral surfaces of the pultrusion plate.

In a preferred embodiment, a continuous, preferably substantially horizontal, row of adjoining tows of carbon fibre material extends between the lateral surfaces, said continuous row being spaced apart from the top surface and from the bottom surface of the pultrusion plate.

In another aspect, the present invention relates to pultrusion plate comprising a top surface, an opposing bottom surface and two lateral surfaces, wherein the pultrusion plate is formed of a pultrusion fibre material comprising a glass fibre material and a carbon fibre material, wherein carbon fibre material is provided along the entire lateral surfaces of the pultrusion plate, and wherein the glass fibre material is selected from
a glass fibre fabric,
a glass fibre preform comprising a consolidated arrangement of glass fibres and a binding agent, and
a plurality of glass fibres encapsulated by a veil or a foil.

In a preferred embodiment of the pultrusion plate, the glass fibre preform comprises multiple glass fibre layers stacked on top of each other. In a preferred embodiment of the pultrusion plate, the glass fibre fabric is a stitched fabric, a woven fabric, a knit fabric, a nonwoven fabric or a continuous filament mat. In a preferred embodiment, the glass fibre preform comprises glass fibre rovings.

Preferably, the carbon fibre material comprises a plurality of tows of carbon fibre material, and wherein adjoining tows of carbon fibre material are provided along the entire lateral surfaces of the pultrusion plate. In a preferred embodiment, the tows of carbon fibre material are arranged in a plurality of rows of tows, and optionally a plurality of columns of tows, as seen in a vertical cross section of the pultrusion plate.

In a preferred embodiment, the lateral surfaces of the pultrusion plate are free from glass fibres, preferably by providing a continuous path of adjoining tows of carbon fibre material along the lateral edges of the pultrusion plate, the continuous path of adjoining tows of carbon fibre material extending from the top surface to the opposing bottom surface of the pultrusion plate.

In a preferred embodiment, the glass fibre material and the carbon fibre material form a non-random pattern, preferably a symmetrical pattern, as seen in a vertical cross section of the pultrusion plate.

In another aspect, the present invention relates to a reinforcing structure for a wind turbine blade, the reinforcing structure comprising a plurality of pultrusion plates according to the present invention.

In another aspect, the present invention relates to a pultrusion plate comprising a top surface, an opposing bottom surface and two lateral surfaces, wherein the pultrusion plate is formed of a pultrusion fibre material comprising a glass fibre material and a plurality of tows of carbon fibre material, and wherein adjoining tows of carbon fibre material are provided along the entire top surface and along the entire bottom surface of the pultrusion plate. The present invention also relates to a method of manufacturing a wind turbine blade shell component, the method comprising the steps of providing a plurality of pultrusion plates, wherein each pultrusion plate comprises a top surface, an opposing bottom surface and two lateral surfaces, arranging the pultrusion plates on a blade shell material in a mould for the blade shell component, and bonding the pultrusion plates with the blade shell material to form the blade shell component, wherein each pultrusion plate is formed of a pultrusion fibre material comprising a glass fibre material, such as a glass fibre fabric or a glass fibre preform, and a plurality of tows of carbon fibre material, and wherein adjoining tows of carbon fibre material are provided along the entire top surface and along the entire bottom surface of the pultrusion plate.

The top and bottom surfaces of the pultrusion plate may be covered by peel ply. In a preferred embodiment, the pultrusion plates have a length corresponding to an entire length of a spar cap for a wind turbine blade shell. In a preferred embodiment, the pultrusion plates are bonded with the blade shell material in a resin infusion process.

In one aspect, the present invention relates to a wind turbine blade shell component, such as shell half, obtainable by the method of the present invention. The present invention also relates to a wind turbine blade having a pressure side shell and a suction side shell, wherein the suction and pressure side shells are joined along a leading and trailing edge of the blade. One or both of the suction and pressure side shell components further include a reinforcing structure, such as a spar cap bonded to an interior surface of the shell, wherein the spar cap includes a plurality of pultrusion plates according to the present invention. The pultrusion plates preferably have a continuous unbroken length along an entire length of the spar cap.

In a preferred embodiment, the pultrusion plate has a rectangular cross section. In a preferred embodiment, the pultrusion plate has the shape of a rectangular cuboid. The pultrusion plate has a length, which typically extend in a substantially spanwise direction when the pultrusion plate is arranged in the blade shell. The pultrusion plate also has a width, which typically extends in a substantially chordwise direction when the pultrusion plate is arranged in the blade shell. The pultrusion plate also has a height or thickness, which typically extends in a substantially flapwise direction when the pultrusion plate is arranged in the blade shell. The thickness of the pultrusion plate is preferably between 3 and 10 mm, more preferably between 4 and 7 mm. The length of the plate is typically its largest dimension. The length of the plate extends in the same direction as its longitudinal axis.

The length of the pultrusion plate is typically between 50 and 150 meters, preferably between 50 and 100 meters, more preferably between 70 and 100 meters. The height/thickness of the pultrusion plate is preferably between 2 and 10 millimeters, preferably between 3 and 7 millimeters, most preferably between 4 and 6 millimeters. The width of the plate is preferably between 20 and 300 millimeters, most preferably between 80 and 150 millimeters. In a preferred embodiment, the reinforcing structure, such as the spar cap, comprises between 1 and 15 stacks of pultrusion plates arranged next to each other, more preferably between 3 and 9 stacks. Each stack may comprise up to 20 pultrusion plates arranged on top of each other, such as 2-20 pultrusion plates or 2-10 pultrusion plates. Thus, each reinforcing section, such as each spar cap, may comprise 10 to 200 pultrusion plates.

The pultrusion fibre material preferably comprises a plurality of tows or rovings of carbon fibre material. Thus, each pultrusion plate may comprise 20-200 tows of carbon fibre material in total. The tows will usually extend in the length direction of the pultrusion plate, i.e. substantially parallel to its longitudinal axis, or parallel to the spanwise direction when arranged in the blade shell. In a preferred embodiment, the tows of carbon fibre material are arranged in a regular array or regular grid of rows and columns of tows, as seen in a vertical cross section of the pultrusion plate. The pultrusion plate preferably comprises at least 10 rows and at least 10 columns of tows.

All features and embodiments discussed above with respect to the method of manufacturing a wind turbine blade shell component likewise apply to the pultrusion plate or to the reinforcing structure of the present invention and vice versa.

In another aspect, the present invention relates to a reinforcing structure for a wind turbine blade, the reinforcing structure comprising a plurality of pultrusion plates according to the present invention. The reinforcing structure will typically be a spar cap or a main laminate. In some embodiments, the reinforcing structure comprises a box spar. In other embodiments, the reinforcing structure comprises a spar beam. In a preferred embodiment, the elongate reinforcing structure is a spar structure, such as a spar cap, a spar beam or a box spar. It is preferred that the reinforcing structure extends along the blade in a spanwise direction. Typically, the reinforcing structure will extend over 60-95% of the blade length. The wind turbine blade is usually manufactured from two shell halves, a pressure side shell half and a suction side shell half. Preferably, both shell halves comprise an elongate reinforcing structure, such as a spar cap or a main laminate, according to the present invention.

In another aspect, the present invention relates to a wind turbine blade or to a wind turbine blade component comprising a reinforcing structure according to the present invention, or to a wind turbine blade shell component obtainable by the afore-mentioned method of manufacturing a wind turbine blade shell component. In another aspect, the present invention relates to a wind turbine blade shell component comprising a plurality of pultrusion plates according to the present invention.

The present invention also relates to a lightning protection system for a wind turbine blade, the lightning protection system comprising a lightning conductor, such as a cable, for example a copper cable, disposed at least partially in the interior of the blade, one or more electrically conducting lightning receptors disposed on one or more of the surfaces of the blade, wherein the one or more electrically conducting lightning receptors are electrically connected to a plurality of pultrusion plates according to the present invention, or to a reinforcing structure, such as a spar cap, of the present invention. In another aspect, the present invention relates to a wind turbine blade comprising a lightning protection system as described above, i.e. the lightning protection system comprising a lightning conductor, such as a cable, for example a copper cable, disposed at least partially in the interior of the blade, one or more electrically conducting lightning receptors disposed on one or more of the surfaces of the blade, wherein the one or more electrically conducting lightning receptors are electrically connected to a plurality of pultrusion plates according to the present invention, or to a reinforcing structure, such as a spar cap, of the present invention.

The shell halves will typically be produced by infusing a fibre lay-up of fibre material with a resin such as epoxy, polyester or vinyl ester. Usually, the pressure side shell half and the suction side shell half are manufactured using a blade mould. Each of the shell halves may comprise spar caps or main laminates provided along the respective pressure and suction side shell members as reinforcing structures. The spar caps or main laminates may be affixed to the inner faces of the shell halves.

The spar structure is preferably a longitudinally extending load carrying structure, preferably comprising a beam or spar box for connecting and stabilizing the shell halves. The spar structure may be adapted to carry a substantial part of the load on the blade. In some embodiments, the reinforcing structure is arranged within the pressure side shell half. In other embodiments, the reinforcing structure is arranged within the suction side shell half.

In a preferred embodiment, the pressure side shell half and the suction side shell half of the blade are manufactured in respective mould halves, preferably by vacuum assisted resin transfer moulding. According to some embodiments, the pressure side shell half and the suction side shell half each have a longitudinal extent L of 50-110 m, preferably 60-90 m.

According to some embodiments, the method further comprises a step of arranging one or more shear webs in at least one of the shell halves, usually at the location of the reinforcing structure. Each shear web may comprise a web body, a first web foot flange at a first end of the web body, and a second web foot flange at a second end of the web body. In some embodiments, the shear webs are substantially I-shaped. Alternatively, the shear webs may be substantially C-shaped.

In another aspect, the present invention relates to a pultrusion process for manufacturing the pultrusion plate of the present invention, and to a pultrusion plate obtainable by said pultrusion process. Said pultrusion process preferably comprises the provision of a plurality of bobbins carrying respective tows of carbon fibre material. A centre reinforcement material is provided in the form of a glass fibre fabric, a glass fibre preform comprising a fibre material, or a glass fibre material encapsulated by a veil or foil, as further explained above. The tows of carbon fibre material and the centre reinforcement material are preferably pulled through guide plates, a resin bath, and a heated die by a pulling mechanism. The continuous pultrusion string can be cut into individual pultrusion plates with a length of between 30-200 meters, preferably 50-100 meters, by a cutter. The shaped impregnated plates are then advantageously cured. The guide plates and/or the die may take the form of a spreader or inlet comprising multiple apertures, some of the apertures receiving a respective carbon fibre tow, and other apertures receiving the glass fibre material, preferably a glass fibre fabric or preform. The apertures can be spaced and they are located so as to guide the fibre to form a desired pattern of glass fibre material and carbon fibre material in the pultrusion plates.

As used herein, the term "vertical cross section of the pultrusion plate" refers to a cross section of the pultrusion plate on a plane perpendicular to its longitudinal axis, i.e. the axis along the length direction of the pultrusion plate, which is usually the direction in which the pultrusion plate has its greatest extension. When arranged in the blade shell, the longitudinal axis or the length extension of the pultrusion plate will usually coincide substantially with a spanwise direction of the blade.

As used herein, the term "spanwise" is used to describe the orientation of a measurement or element along the blade from its root end to its tip end. In some embodiments, spanwise is the direction along the longitudinal axis and longitudinal extent of the wind turbine blade.

As used herein, the term "horizontal" refers to a direction that is substantially parallel to the chord of the blade when the pultrusion plates are arranged in the blade shell. The vertical direction is substantially perpendicular to the horizontal direction, extending in a substantially flapwise direction of the blade.

As used herein the term "fabric" means a material comprising a network of fibres including, but not limited to, woven or knitted materials, tufted or tufted-like materials, nonwoven webs, and so forth

### Description of the invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 is a schematic top view of a shell half of a wind turbine blade according to the present invention,
Fig. 5 is a schematic vertical cross section through part of a shell half with a reinforcing structure of the present invention,
Fig. 6 illustrates a pultrusion process for manufacturing the pultrusion plates of the present invention,
Figs. 7a-7f is a schematic vertical cross-sectional view of different embodiments of a hybrid pultrusion plate,
Fig. 8 is a vertical cross-sectional view of a reinforcing structure comprising the hybrid pultrusion plates,
Fig. 9 is a schematic vertical cross-sectional view of a hybrid pultrusion plate,
Fig. 10 is a schematic vertical cross-sectional view of additional embodiments of a hybrid pultrusion plate,
Fig. 11 is a schematic illustration of a lightning protection system of the present invention,
Fig. 12 is a schematic perspective view of a pultrusion plate according to the present invention,
Fig. 13 is a schematic vertical cross-sectional view of one embodiment of a pultrusion plate according to the present invention,
Fig. 14 is a schematic vertical cross-sectional view of another embodiment of a pultrusion plate according to the present invention, and
Fig. 15 is a schematic vertical cross-sectional view of another embodiment of a pultrusion plate according to the present invention.

### Detailed description of the figures

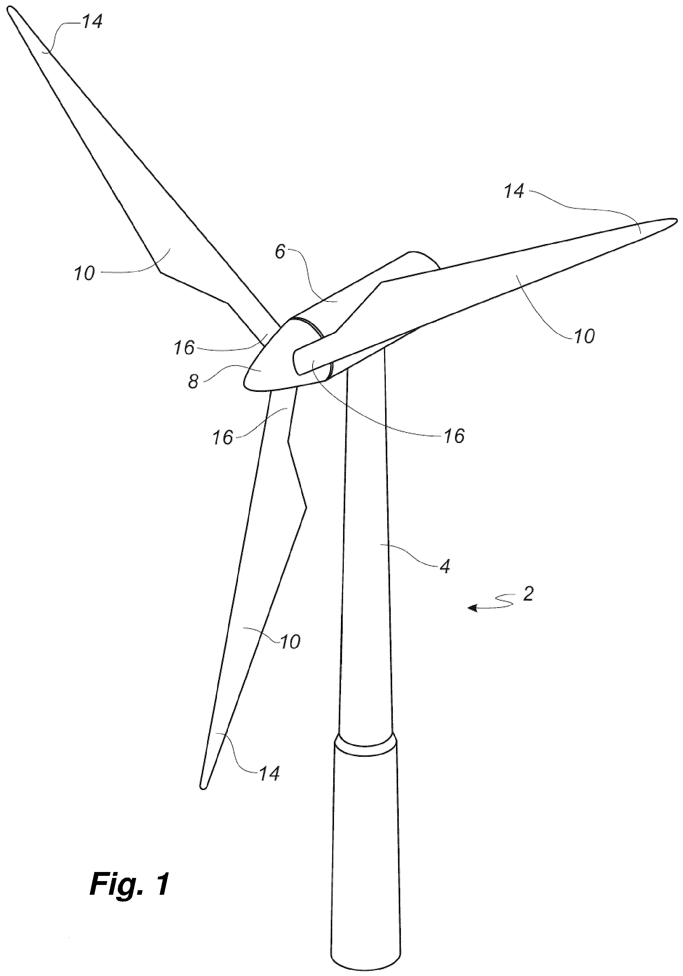

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

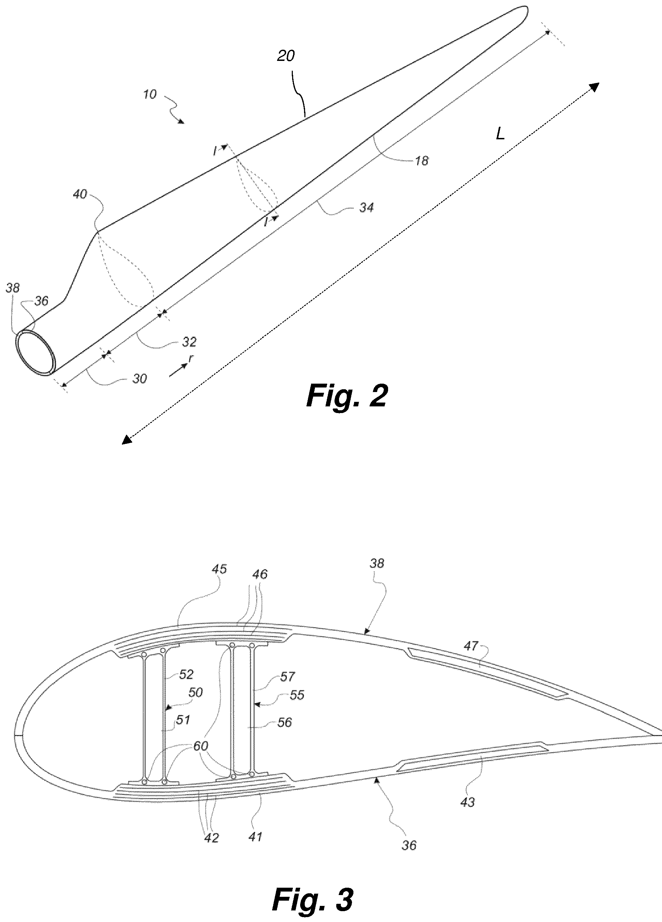

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance rfrom the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34. Fig. 2 also illustrates the longitudinal extent L, length or longitudinal axis of the blade.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

Fig. 3 shows a schematic view of a cross section of the blade along the line I-I shown in Fig. 2. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 36 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The blade shells 36, 38 may comprise further fibre-reinforcement at the leading edge and the trailing edge. Typically, the shell parts 36, 38 are bonded to each other via glue flanges.

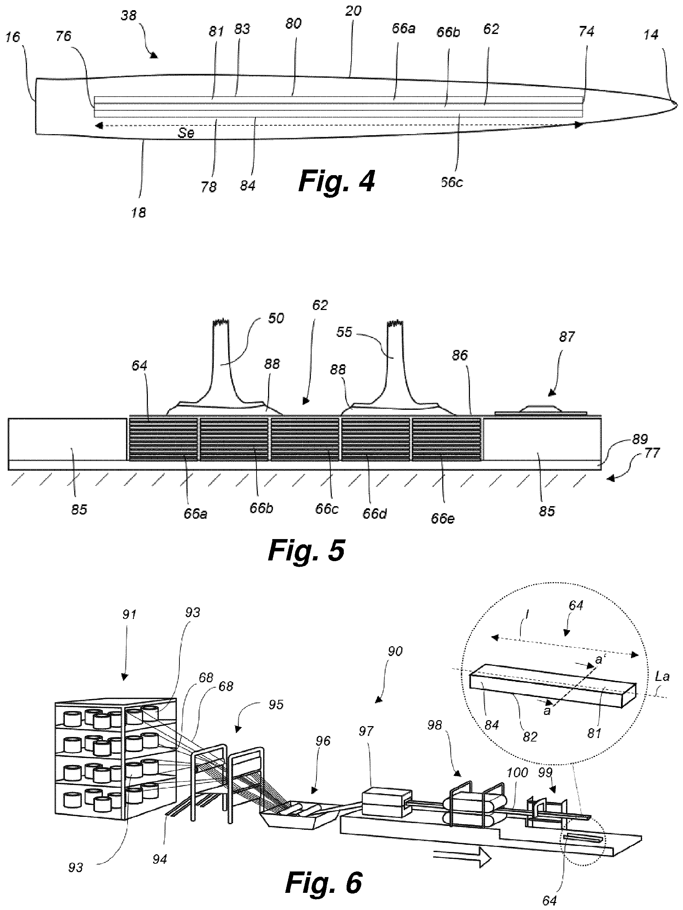

Fig. 4 is a schematic top view of a shell half 38 of a wind turbine blade according to the present invention, illustrating the location of a reinforcing structure 62 having a spanwise extent Se. In the illustrated embodiment, the reinforcing structure 62 comprises three adjacent stacks 66a, 66b, 66c of pultrusion plates. As seen in Fig. 4, the elongate reinforcing structure 62 extends in a substantially spanwise direction of the blade, with adjacent stacks 66a, 66b, 66c of pultrusion plates. The elongate reinforcing structure 62 has a tip end 74, closest to the tip end of the blade, and a root end 76, closest to the root end of the blade. The elongate reinforcing structure also comprises a spanwise extending front edge 78, which is closest to the leading edge 18 of the blade, and a spanwise extending rear edge 80, which is closest to the trailing edge 20 of the blade.

Fig. 5 is a schematic vertical cross section through part of a shell half with a reinforcing structure 62 of the present invention, as seen from the root end of the blade. The reinforcing structure 62, such as a spar cap, comprises a plurality of pultrusion plates 64 according to the present invention, arranged in adjacent stacks 66a-e, which are arranged on blade shell material 89 in mould 77 for the blade shell component, such as a shell half. The stacked pultrusion plates 64 are then bonded with the blade shell material 89 to form the blade shell component, such as the shell half with the spar cap. Core material 85 is arranged on either chordwise side of the reinforcing structure 62. A first shear web 50 and a second shear web 55 is placed on the spar cap 62 via respective bond lines 88. The stacks 66a-e may be covered by a carbon biax layer 86 or a carbon veil or a glass/carbon hybrid fabric or a glass/carbon hybrid veil extending towards current connection terminal 87 of a lightning protection system.

Fig. 6 illustrates a pultrusion process for manufacturing the pultrusion plates 64 of the present invention. The pultrusion process makes use of a pultrusion system 90 which comprises a portion for receiving a plurality of bobbins 93 each supply a tow of carbon fibre material 68 from a creel 91. A centre reinforcement material 94 is provided in the form of a glass fibre fabric, a glass fibre preform comprising a fibre material, or a glass fibre material encapsulated by a veil or foil, as further explained below.

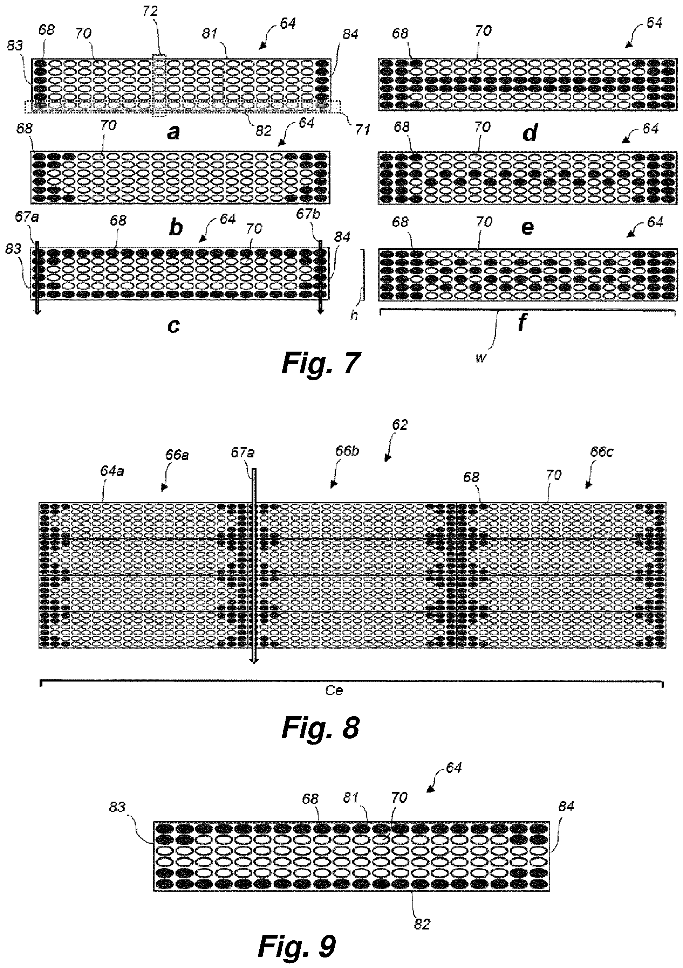

The tows 68 and the glass fibre fabric 94 are pulled through guide plates 95, resin bath 96, and heated die 97 by pulling mechanism 98. The pultrusion string 100 is cut into individual pultrusion plates 64 by cutter 99. The shaped impregnated fibres are cured and can optionally be wound onto a roll. The guide plates and/or the die may take the form of a spreader or inlet comprising multiple apertures, each aperture receiving a respective carbon fibre tow or glass fibre two. The apertures can be spaced and they are located so as to guide the fibre tows and the fabric/preform/encapsulated glass fibre part to form a desired pattern of glass fibre material and carbon fibre material in the pultrusion plates 64. The enlarged view of the pultrusion plate 64 in Fig. 6 also illustrates its longitudinal axis La and its length l. The height/thickness h and width w of the pultrusion plate are illustrated in Fig. 8, see plate 64f.

Various of the patterns of a hybrid pultrusion plate are illustrated in Fig. 7. Each pultrusion plate 64 in the various embodiments illustrated in Figs. 7a-f comprises a plurality of tows of glass fibre material 70, indicated as white elliptical shapes, and a plurality of tows ofcarbon fibre material 68, indicated as black elliptical shapes. As illustrated in Fig. 7a, the tows of glass fibre material 70 and the tows of carbon fibre material 68 are arranged in an array of rows 71 and columns 72 of tows, as seen in a vertical cross section of the pultrusion plate.

As illustrated in Fig. 7a, each pultrusion plate comprises a top surface 81, an opposing bottom surface 82 and two lateral surfaces 83, 84, wherein adjoining tows of carbon fibre material are provided along the lateral surfaces 83, 84. This provides respective continuous paths 67a, 67b of adjoining tows of carbon fibre material extending from the top surface 81 to the opposing bottom surface 82 of the pultrusion plate 64 along the lateral surfaces.

As seen in the various embodiments of Fig. 7, the plurality of tows of glass fibre material 70 and the plurality of tows of carbon fibre material 68 form a non-random pattern, preferably a symmetrical pattern, as seen in a vertical cross section of the pultrusion plate 64. Fig. 7a shows an embodiment where adjoining tows of carbon fibre material are only provided along the lateral surfaces 83, 84. In Fig. 7b, the carbon tows additionally extend along part of the upper and lower surfaces 81, 82, to some extent from the lateral surfaces 83, 84 towards the centre. In the embodiment of Fig. 7c, the carbon tows additionally extend along the upper and lower surfaces 81, 82 across the entire width of the pultrusion plate. The embodiment illustrated in Fig. 7d comprises several rows of adjoining carbon tows 68 along the lateral surfaces, as well as a continuous line of carbon tows extending between the lateral edges within the pultrusion plate. A similar configuration is shown in Fig. 7e, wherein the centre line is somewhat more scattered. Finally, Fig. 7f illustrates an embodiment in which several rows of adjoining carbon tows 68 are provided along the lateral surfaces, and in addition a checkerboard pattern is provided in a centre region of the pultrusion plate 64.

Fig. 8 is a schematic vertical cross-sectional view of a reinforcing structure 62 such as a spar cap comprising three chordwise adjacent stacks 66a-c of four pultrusion plates 64 per stack. Several continuous paths of adjoining tows of carbon fibre material extend from the top surface of the reinforcing structure 62 to its bottom surface as illustrated at 67a by way of the adjoining carbon tows provided at the lateral edges of the individual plates 64.

Fig. 9 is a cross sectional view of another embodiment of a pultrusion plate 64. Here, adjoining tows of carbon fibre material 68 are provided along the top surface 81 and the bottom surface 82 of the pultrusion plate, whereas the lateral edges 83, 84 comprise both carbon fibre tows and glass fibre tows. Thus, a conductive path of adjoining carbon fibre tows is provided in a horizontal direction.

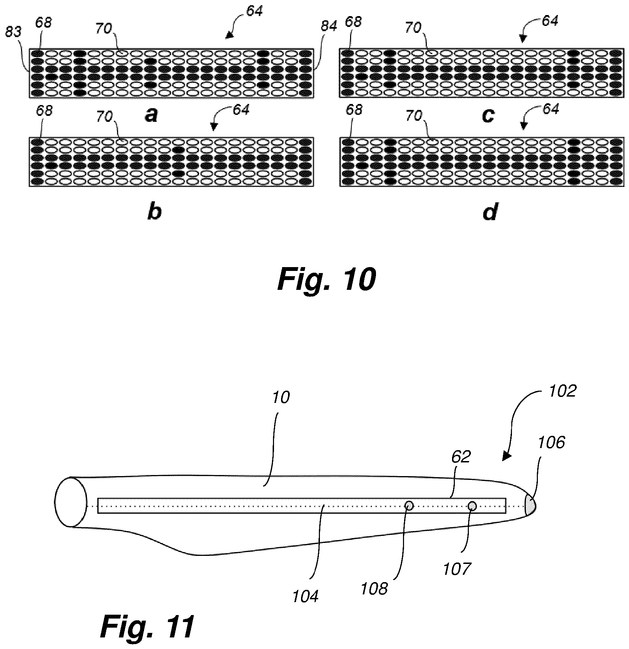

Fig. 10 is a schematic vertical cross-sectional view of yet additional embodiments of a pultrusion plate. Again, the plurality of tows of glass fibre material 70 and the plurality of tows of carbon fibre material 68 form a non-random pattern as seen in a vertical cross section of the pultrusion plate 64. In each of Figs. 10a-d, adjoining tows of carbon fibre material are provided along the lateral surfaces 83, 84. Also, a continuous line of carbon tows extends through the centre, between the lateral edges of the pultrusion plate.

Furthermore, one or more vertically extending columns of adjoining tows of carbon fibre material are provided closer to the middle of the pultrusion plate, some of which extend all the way from the top surface to the bottom surface, see Figs. 10a, d, and some of which extend only to the top surface, but not to the bottom surface, see Fig. 10c. Fig. 10b shows an embodiment wherein a vertical column extends at the centre of the plate, however, without extending all the way to the top surface or to the bottom surface.

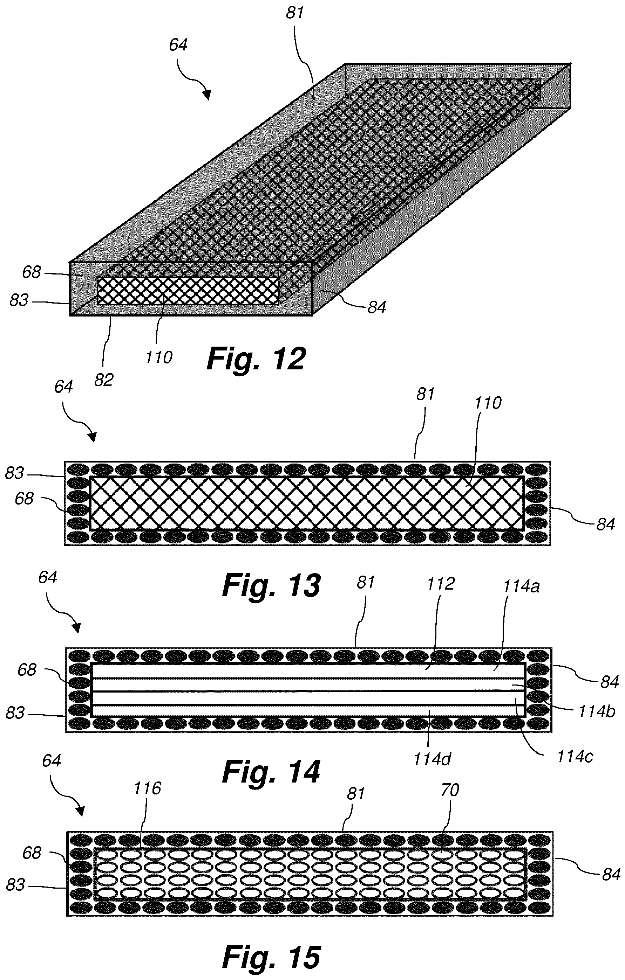

Fig. 11 is a schematic illustration of a lightning protection system of the present invention. The lightning protection system 102 comprises a lightning conductor 104, preferably a down conductor, disposed at least partially in the interior of the blade 10. A tip lightning receptor 106 and two side lightning receptors 107, 108 are disposed on or in one or more of the outer surfaces of the blade 10, wherein the electrically conducting lightning receptors 106, 107, 108 are electrically connected to a spar cap 62 of the present invention. The spar cap 62 may advantageously comprise a plurality of pultrusion plates according to the invention, for example, as illustrated in Figs. 12-15,

Fig. 12 is a perspective view of a pultrusion plate 64 according to the present invention. A carbon fibre material 68 is provided along the entire lateral surfaces 83, 84 of the pultrusion plate, and also along the top surface 81 and along the bottom surface 82 in the illustrated embodiment. The glass fibre material is present as a glass fibre fabric 110, e.g., a stitched glass fibre fabric. A similar embodiment of a pultrusion plate according to the present invention is shown in Fig. 13, which is a schematic vertical cross-sectional view taken along the line a-a' in Fig. 6. Here, carbon fibre material is provided as tows 68 of carbon fibre material extending along the lateral surfaces 83, 84 and along the top/bottom surfaces.

Another embodiment of a pultrusion plate 64 of the present invention is illustrated in Fig. 14, which is a schematic vertical cross-sectional view taken along the line a-a' in Fig. 6. Here, the glass fibre material at the centre of the plate is a glass fibre preform 112, which may be composed of a consolidated arrangement of glass fibres, such as glass fibre layers 114a-d, which are consolidated by a binding agent. Fig. 15 illustrates a third embodiment of a pultrusion plate according to the present invention, which comprises a plurality of glass fibres, such as tows 70 of glass fibre material, encapsulated by a veil or a foil 116. Again, this glass fibre arrangement is surrounded by a plurality of tows 68 of carbon fibre material.

Advantageously, the glass fibre fabric 110, the glass fibre preform 112 or the plurality of glass fibres encapsulated by a veil 116 or a foil are joined with the carbon fibre material, such as a plurality of tows of carbon fibre material in the pultrusion process, as illustrated in Fig. 6 wherein the reference numeral 94 denotes the glass fibre fabric, the glass fibre preform or the plurality of glass fibres encapsulated by a veil or a foil.

The invention is not limited to the embodiments described herein and may be modified or adapted without departing from the scope of the present appended claims.

### List of reference numerals

- 4: tower
- 6: nacelle
- 8: hub
- 10: blades
- 14: blade tip
- 16: blade root
- 18: leading edge
- 20: trailing edge
- 30: root region
- 32: transition region
- 34: airfoil region
- 36: pressure side shell part
- 38: suction side shell part
- 40: shoulder
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 62: reinforcing structure
- 64: pultrusion plate
- 66: stack of pultrusion plates
- 67: path
- 68: tow of carbon fibre material
- 70: tow of glass fibre material
- 71: row of tows
- 72: column of tows
- 74: tip end of reinforcing structure
- 76: root end of reinforcing structure
- 77: mould
- 78: front edge of reinforcing structure
- 80: rear edge of reinforcing structure
- 81: top surface of pultrusion plate
- 82: bottom surface of pultrusion plate
- 83: first lateral surface of pultrusion plate
- 84: second lateral surface of pultrusion plate
- 85: core material
- 86: carbon biax layer
- 87: current connection terminal
- 88: bond line
- 89: shell material
- 90: pultrusion system
- 91: creel
- 93: bobbin with tow of carbon fibre material
- 94: centre reinforcement material / fabric / preform / fibres within veil/foil
- 95: guide plate
- 96: resin bath
- 97: heated die
- 98: pulling mechanism
- 99: cutter
- 100: pultrusion string
- 102: lightning protection system
- 104: down conductor
- 106: tip receptor
- 107: side receptor
- 108: side receptor
- 110: glass fibre fabric
- 112: glass fibre preform
- 114: layers of glass fibre preform
- 116: veil/foil
- L: length
- I: length of pultrusion plate
- w: width of pultrusion plate
- h: height of pultrusion plate
- La: longitudinal axis of pultrusion plate
- r: distance from hub
- R: rotor radius
- Se: spanwise extent of reinforcing structure
- Ce: chordwise extent of reinforcing structure

## Claims

1. A method of manufacturing a wind turbine blade shell component (38), the method comprising the steps of
providing a plurality of pultrusion plates (64), wherein each pultrusion plate (64) comprises a top surface (81), an opposing bottom surface (82) and two lateral surfaces (83, 84),
arranging the pultrusion plates (64) on a blade shell material (89) in a mould (77) for the blade shell component, and
bonding the pultrusion plates (64) with the blade shell material to form the blade shell component,
wherein each pultrusion plate (64) is formed of a pultrusion fibre material comprising a glass fibre material (70) and a carbon fibre material (68), **characterized in that** carbon fibre material is provided along the entire lateral surfaces (83, 84) of the pultrusion plate, and wherein the glass fibre material is selected from
a glass fibre fabric (110),
a glass fibre preform (112) comprising a consolidated arrangement of glass fibres (114) and a binding agent, and
a plurality of glass fibres encapsulated by a veil or a foil (116).

2. A method according to claim 1, wherein the glass fibre preform comprises multiple glass fibre layers stacked on top of each other.

3. A method according to claims 1 or 2, wherein the glass fibre fabric is a stitched fabric, a woven fabric, a knit fabric, a nonwoven fabric or a continuous filament mat.

4. A method according to any of the preceding claims, wherein the glass fibre preform comprises glass fibre rovings.

5. A method according to any of the preceding claims, wherein the carbon fibre material comprises a plurality of tows of carbon fibre material (68), and wherein adjoining tows of carbon fibre material are provided along the entire lateral surfaces (83, 84) of the pultrusion plate.

6. A method according to any of the preceding claims, wherein the lateral surfaces of each pultrusion plate are free from glass fibres, preferably by providing a continuous path of adjoining tows of carbon fibre material along the lateral edges of the pultrusion plate, the continuous path of adjoining tows of carbon fibre material extending from the top surface to the opposing bottom surface of the pultrusion plate, and wherein the continuous path of adjoining tows of carbon fibre material provides an electrically conducting path throughout the vertical direction of the pultrusion plate.

7. A method according to any of the preceding claims, wherein the pultrusion plates are arranged into adjacent stacks of pultrusion plates, and wherein a continuous path (67) of adjoining tows of carbon fibre material extends from the top surface of the uppermost pultrusion plate to the bottom surface of the lowermost pultrusion plate of each stack of pultrusion plates.

8. A pultrusion plate (64) comprising a top surface (81), an opposing bottom surface (82) and two lateral surfaces (83, 84), wherein the pultrusion plate is formed of a pultrusion fibre material comprising a glass fibre material (70) and a carbon fibre material (68), **characterized in that** carbon fibre material is provided along the entire lateral surfaces (83, 84) of the pultrusion plate, and wherein the glass fibre material is selected from
a glass fibre fabric,
a glass fibre preform comprising a consolidated arrangement of glass fibres and a binding agent, and
a plurality of glass fibres encapsulated by a veil or a foil.

9. A pultrusion plate according to claim 8, wherein the glass fibre preform comprises multiple glass fibre layers stacked on top of each other.

10. A pultrusion plate according to claims 8 or 9, wherein the glass fibre fabric is a stitched fabric, a woven fabric, a knit fabric, a nonwoven fabric or a continuous filament mat.

11. A pultrusion plate according to any of claims 8-10, wherein the glass fibre preform comprises glass fibre rovings.

12. A pultrusion plate according to any of claims 8-11, wherein the carbon fibre material comprises a plurality of tows of carbon fibre material (68), and wherein adjoining tows of carbon fibre material are provided along the entire lateral surfaces (83, 84) of the pultrusion plate.

13. A reinforcing structure for a wind turbine blade, the reinforcing structure comprising a plurality of pultrusion plates (64) according to any of claims 8-12.

14. A wind turbine blade shell component comprising a plurality of pultrusion plates (64) according to any of claims 8-12.

15. A lightning protection system (102) for a wind turbine blade, the lightning protection system comprising a lightning conductor (104) disposed at least partially in the interior of the blade, one or more electrically conducting lightning receptors (106, 107, 108) disposed on one or more of the surfaces of the blade, wherein the one or more electrically conducting lightning receptors are electrically connected to a spar cap, wherein the spar cap comprises a plurality of pultrusion plates (64) according to any of claims 8-12.

## Patentansprüche

1. Verfahren zur Herstellung einer Schalenkomponente (38) für ein Windkraftanlagenblatt, wobei das Verfahren die folgenden Schritte umfasst:
Bereitstellen mehrerer Pultrusionsplatten (64), wobei jede Pultrusionsplatte (64) eine Oberseite (81), eine gegenüberliegende Unterseite (82) und zwei Seitenflächen (83, 84) umfasst,
Anordnen der Pultrusionsplatten (64) an einem Blattschalenmaterial (89) in einer Form (77) für die Blattschalenkomponente, und
Verbinden der Pultrusionsplatten (64) mit dem Blattschalenmaterial, um die Blattschalenkomponente zu bilden,
wobei jede Pultrusionsplatte (64) aus einem Pultrusionsfasermaterial gebildet ist, das ein Glasfasermaterial (70) und ein Kohlefasermaterial (68) umfasst, **dadurch gekennzeichnet, dass** Kohlefasermaterial entlang der gesamten Seitenflächen (83, 84) Pultrusionsplatte bereitgestellt ist, und wobei das Glasfasermaterial aus Folgendem ausgewählt ist:
einer Glasfasertextilie (110),
einer Glasfaservorform (112), die eine verfestigte Anordnung aus Glasfasern (114) und einem Bindemittel umfasst, und
mehreren Glasfasern, die in einem Schleier oder einer Folie (116) eingekapselt sind.

2. Verfahren nach Anspruch 1, wobei die Glasfaservorform mehrere Glasfaserschichten umfasst, die aufeinander gestapelt sind.

3. Verfahren nach Anspruch 1 oder 2, wobei die Glasfasertextilie ein genähter Stoff, ein Gewebe, ein Gestrick, ein Vlies oder eine Endlosfasermatte ist.

4. Verfahren nach einem der vorhergehenden Ansprüche, wobei die Glasfaservorform Glasfaservorgarn umfasst.

5. Verfahren nach einem der vorhergehenden Ansprüche, wobei das Kohlefasermaterial mehrere Spinnkabel aus Kohlefasermaterial (68) umfasst und wobei benachbarte Spinnkabel aus Kohlefasermaterial entlang der gesamten Seitenflächen (83, 84) der Pultrusionsplatte bereitgestellt werden.

6. Verfahren nach einem der vorhergehenden Ansprüche, wobei die Seitenflächen jeder Pultrusionsplatte frei von Glasfasern sind, vorzugsweise indem ein durchgehender Weg aus benachbarten Spinnkabeln aus Kohlefasermaterial entlang der Seitenkanten der Pultrusionsplatte bereitgestellt wird, wobei sich der durchgehende Weg aus benachbarten Spinnkabeln aus Kohlefasermaterial von der Oberseite zu der gegenüberliegenden Unterseite der Pultrusionsplatte erstreckt und wobei der durchgehende Weg aus benachbarten Spinnkabeln aus Kohlefasermaterial einen elektrisch leitenden Weg durch die vertikale Richtung der Pultrusionsplatte bereitstellt.

7. Verfahren nach einem der vorhergehenden Ansprüche, wobei die Pultrusionsplatten in nebeneinanderliegenden Stapeln aus Pultrusionsplatten angeordnet sind, und wobei sich ein durchgehender Weg (67) aus benachbarten Spinnkabeln aus Kohlefasermaterial von der Oberseite der obersten Pultrusionsplatte zu der Unterseite der untersten Pultrusionsplatte jedes Stapels aus Pultrusionsplatten erstreckt.

8. Pultrusionsplatte (64), umfassend eine Oberseite (81), eine gegenüberliegende Unterseite (82) und zwei Seitenflächen (83, 84), wobei die Pultrusionsplatte aus einem Pultrusionsfasermaterial gebildet ist, das ein Glasfasermaterial (70) und ein Kohlefasermaterial (68) umfasst,
**dadurch gekennzeichnet, dass** Kohlefasermaterial entlang der gesamten Seitenflächen (83, 84) der Pultrusionsplatte bereitgestellt ist, und wobei das Kohlefasermaterial aus Folgendem ausgewählt ist:
einer Glasfasertextilie,
einer Glasfaservorform, die eine verfestigte Anordnung aus Glasfasern und einem Bindemittel umfasst, und
mehreren Glasfasern, die in einem Schleier oder einer Folie eingekapselt sind.

9. Pultrusionsplatte nach Anspruch 8, wobei die Glasfaservorform mehrere Glasfaserschichten umfasst, die aufeinander gestapelt sind.

10. Pultrusionsplatte nach Anspruch 8 oder 9, wobei die Glasfasertextilie ein genähter Stoff, ein Gewebe, ein Gestrick, ein Vlies oder eine Endlosfasermatte ist.

11. Pultrusionsplatte nach einem der Ansprüche 8 bis 10, wobei die Glasfaservorform Glasfaservorgarn umfasst.

12. Pultrusionsplatte nach einem der Ansprüche 8 bis 11, wobei das Kohlefasermaterial mehrere Spinnkabel aus Kohlefasermaterial (68) umfasst und wobei benachbarte Spinnkabel aus Kohlefasermaterial entlang der gesamten Seitenflächen (83, 84) der Pultrusionsplatte bereitgestellt sind.

13. Verstärkungsstruktur für ein Windkraftanlagenblatt, wobei die Verstärkungsstruktur mehrere Pultrusionsplatten (64) nach einem der Ansprüche 8 bis 12 umfasst.

14. Schalenkomponente für ein Windkraftanlagenblatt, umfassend mehrere Pultrusionsplatten (64) nach einem der Ansprüche 8 bis 12.

15. Blitzschutzsystem (102) für ein Windkraftanlagenblatt, wobei das Blitzschutzsystem Folgendes umfasst: einen Blitzableiter (104), der zumindest teilweise im Inneren des Blattes angeordnet ist, einen oder mehrere elektrisch leitende Blitzrezeptoren (106, 107, 108), die auf einer oder mehreren der Oberflächen des Blattes angeordnet sind, wobei der eine oder die mehreren elektrische leitenden Blitzrezeptoren elektrisch mit einer Holmkappe verbunden sind, wobei die Holmkappe mehrere Pultrusionsplatten (64) nach einem der Ansprüche 8 bis 12 umfasst.

## Revendications

1. Procédé de fabrication d'un composant de coque de pale d'éolienne (38), le procédé comportant les étapes consistant à
mettre en œuvre une pluralité de plaques de pultrusion (64), dans lequel chaque plaque de pultrusion (64) comporte une surface supérieure (81), une surface inférieure opposée (82) et deux surfaces latérales (83, 84),
agencer les plaques de pultrusion (64) sur un matériau de coque de pale (89) dans un moule (77) pour le composant de coque de pale, et
lier les plaques de pultrusion (64) avec le matériau de coque de pale pour former le composant de coque de pale,
dans lequel chaque plaque de pultrusion (64) est formée à partir d'un matériau de pultrusion à base de fibres comportant un matériau à base de fibres de verre (70) et un matériau à base de fibres de carbone (68), **caractérisé en ce que** le matériau à base de fibres de carbone est mis en œuvre le long de la totalité des surfaces latérales (83, 84) de la plaque de pultrusion, et dans lequel le matériau à base de fibres de verre est choisi parmi
un tissu à base de fibres de verre (110),
une préforme à base de fibres de verre (112) comportant un agencement consolidé de fibres de verre (114) et d'un liant, et
une pluralité de fibres de verre encapsulées par un voile ou une feuille (116).

2. Procédé selon la revendication 1, dans lequel la préforme à base de fibres de verre comporte de multiples couches de fibres de verre empilées les unes sur les autres.

3. Procédé selon la revendication 1 ou la revendication 2, dans lequel le tissu à base de fibres de verre est un tissu cousu, un tissu tissé, un tissu tricoté, un tissu non tissé ou un mat de filaments continus.

4. Procédé selon l'une quelconque des revendications précédentes, dans lequel la préforme à base de fibres de verre comporte des stratifils en fibres de verre.

5. Procédé selon l'une quelconque des revendications précédentes, dans lequel le matériau à base de fibres de carbone comporte une pluralité d'étoupes de matériau à base de fibres de carbone (68), et dans lequel des étoupes contiguës de matériau à base de fibres de carbone sont mises en œuvre le long de la totalité des surfaces latérales (83, 84) de la plaque de pultrusion.

6. Procédé selon l'une quelconque des revendications précédentes, dans lequel les surfaces latérales de chaque plaque de pultrusion sont exemptes de fibres de verre, de préférence par la mise en œuvre d'un trajet continu d'étoupes contiguës de matériau à base de fibres de carbone le long des bords latéraux de la plaque de pultrusion, le trajet continu d'étoupes contiguës de matériau à base de fibres de carbone s'étendant de la surface supérieure à la surface inférieure opposée de la plaque de pultrusion, et dans lequel le trajet continu d'étoupes contiguës de matériau à base de fibres de carbone procure un trajet électriquement conducteur dans l'ensemble de la direction verticale de la plaque de pultrusion.

7. Procédé selon l'une quelconque des revendications précédentes, dans lequel les plaques de pultrusion sont agencées en piles adjacentes de plaques de pultrusion, et dans lequel un trajet continu (67) d'étoupes contiguës de matériau à base de fibres de carbone s'étend de la surface supérieure de la plaque de pultrusion se trouvant le plus en haut à la surface inférieure de la plaque de pultrusion se trouvant le plus en bas de chaque pile de plaques de pultrusion.

8. Plaque de pultrusion (64) comportant une surface supérieure (81), une surface inférieure opposée (82) et deux surfaces latérales (83, 84), dans laquelle la plaque de pultrusion est formée à partir d'un matériau de pultrusion à base de fibres comportant un matériau à base de fibres de verre (70) et un matériau à base de fibres de carbone (68), **caractérisée en ce que** le matériau à base de fibres de carbone est mis en œuvre le long de la totalité des surfaces latérales (83, 84) de la plaque de pultrusion, et dans laquelle le matériau à base de fibres de verre est choisi parmi
un tissu à base de fibres de verre,
une préforme à base de fibres de verre comportant un agencement consolidé de fibres de verre et d'un liant, et
une pluralité de fibres de verre encapsulées par un voile ou une feuille.

9. Plaque de pultrusion selon la revendication 8, dans laquelle la préforme à base de fibres de verre comporte de multiples couches de fibres de verre empilées les unes sur les autres.

10. Plaque de pultrusion selon la revendication 8 ou la revendication 9, dans laquelle le tissu à base de fibres de verre est un tissu cousu, un tissu tissé, un tissu tricoté, un tissu non tissé ou un mat de filaments continus.

11. Plaque de pultrusion selon l'une quelconque des revendications 8 à 10, dans laquelle la préforme à base de fibres de verre comporte des stratifils en fibres de verre.

12. Plaque de pultrusion selon l'une quelconque des revendications 8 à 11, dans laquelle le matériau à base de fibres de carbone comporte une pluralité d'étoupes de matériau à base de fibres de carbone (68), et dans laquelle des étoupes contiguës de matériau à base de fibres de carbone sont mises en œuvre le long de la totalité des surfaces latérales (83, 84) de la plaque de pultrusion.

13. Structure de renforcement pour une pale d'éolienne, la structure de renforcement comportant une pluralité de plaques de pultrusion (64) selon l'une quelconque des revendications 8 à 12.

14. Composant de coque de pale d'éolienne comportant une pluralité de plaques de pultrusion (64) selon l'une quelconque des revendications 8 à 12.

15. Système de protection contre la foudre (102) pour une pale d'éolienne, le système de protection contre la foudre comportant un conducteur de paratonnerre (104) disposé au moins partiellement à l'intérieur de la pale, un ou plusieurs récepteurs de foudre électriquement conducteurs (106, 107, 108) disposés sur une ou plusieurs des surfaces de la pale, dans lequel lesdits un ou plusieurs récepteurs de foudre électriquement conducteurs sont connectés électriquement à une semelle de longeron, dans lequel la semelle de longeron comporte une pluralité de plaques de pultrusion (64) selon l'une quelconque des revendications 8 à 12.
